# EUROPÄISCHE PATENTANMELDUNG

(11) **EP 4 717 502 A1**
(43) Veröffentlichungstag der Anmeldung: **01.04.2026**
(21) Anmeldenummer: 25199783.9
(22) Anmeldetag: 02.09.2025
(51) Int. Cl.: B60L 3/00, B60L 3/04, B60L 3/12, B60L 7/00, B60L 15/20, B60L 50/51, B60L 50/60, H02H 7/08, H02H 7/122, H02M 1/32, H02P 3/22, H02P 6/24, H02P 25/024, H02P 27/08, H02P 29/024

(54) **SCHALTUNGSANORDNUNG ZUR ANSTEUERUNG EINES WECHSELRICHTERS IN EINEM HOCHVOLTNETZ UND VERFAHREN ZUM BETREIBEN EINER SCHALTUNGSANORDNUNG**

(30) Priorität: 06.09.2024 DE 102024208487
(71) Anmelder: VOLKSWAGEN AG, 38440 Wolfsburg (DE)
(72) Erfinder: Kube, Adrian, 38440 Wolfsburg (DE); Balkenohl, Andreas, 38440 Wolfsburg (DE); Gerth, Hendrik, 38440 Wolfsburg (DE); Hüttinger, Simon, 38440 Wolfsburg (DE)

(57) **Zusammenfassung**

Die Erfindung betrifft eine Schaltungsanordnung (7) zur Ansteuerung eines Wechselrichters (3) in einem Hochvoltnetz (1), wobei der Wechselrichter (3) mit einer Elektromaschine (4) und einer Hochvoltbatterie (2) verbunden ist, wobei die Schaltungsanordnung (7) mindestens einen Mikrocontroller (8), mindestens eine Überwachungsschaltung (9) für den Mikrocontroller (8) und eine Hardware-Schaltung (10) aufweist, wobei die mindestens eine Überwachungsschaltung (9) derart ausgebildet ist, im Fehlerfall des Mikrocontrollers (8) diesen zu deaktivieren und ein Schaltsignal für die Hardware-Schaltung (10) zu erzeugen, wobei die Hardware-Schaltung (10) zunächst einen Freilauf erzwingt und danach ein Umschaltsignal von einem Freilauf in einen aktiven Kurzschluss erzeugt, wobei der Mikrocontroller (8) derart ausgebildet ist, in Abhängigkeit von Parametern der Elektromaschine (4) und/oder des Hochvoltnetzes (1) eine optimale Freilaufzeit zu bestimmen, wobei die Hardware-Schaltung (10) derart ausgebildet ist, dass die optimale Freilaufzeit von der Hardware-Schaltung (10) durch Änderung eines Parameters kontinuierlich gemäß den Vorgaben des Mikrocontrollers (8) eingestellt wird, wobei die Überwachungsschaltung (9) derart ausgebildet ist, im Fehlerfall des Mikrocontrollers (8) die Hardware-Schaltung (10) von dem Mikrocontroller (8) zu trennen, wobei ein Umschaltsignal gemäß der zuletzt eingestellten Freilaufzeit erzeugt wird, sowie ein Verfahren.

## Beschreibung

Die Erfindung betrifft eine Schaltungsanordnung zur Ansteuerung eines Wechselrichters in einem Hochvoltnetz und ein Verfahren zum Betreiben einer Schaltungsanordnung.

Bei elektrischen Maschinen kann es erforderlich sein, bei einem Auftreten eines Fehlers in der elektrischen Maschine oder in einer die elektrische Maschine umfassenden Vorrichtung ein umgehendes Abschalten der sich im Betrieb befindlichen elektrischen Maschine zu ermöglichen. Ein derartiger Fehlerfall kann zum Beispiel vorliegen, wenn ein Lastabwurf auftritt oder wenn eine elektrische Maschine umfassende Vorrichtung, beispielsweise ein die elektrische Maschine als Traktionsmotor umfassendes Kraftfahrzeug, einen Fehlerzustand feststellt, beispielsweise infolge eines Bauteilausfalls, eines Software-Fehlers oder ähnlichen Fehlers. Für einen derartigen Abschaltvorgang ist es erforderlich, dass neben weiteren elektrischen Komponenten auch die elektrische Maschine in einen sicheren Zustand überführt wird. Dazu können verschiedene Maßnahmen durchgeführt werden, welche insbesondere ein Herunterfahren einer Versorgungsspannung der elektrischen Maschine, das Vermeiden von Sprüngen im Drehmoment der elektrischen Maschine und/oder das Vermeiden von abrupten Bremsmomenten und/oder das Vermeiden der Einspeisung elektrischer Energie in das Traktionsnetz sein können.

Zum Erreichen des sicheren Zustandes können insbesondere ein aktiver Kurzschluss oder ein Freilauf der elektrischen Maschine geschaltet werden. Welches dieser Mittel sich dabei eignet, kann von dem Maschinentyp der elektrischen Maschine abhängen, also zum Beispiel davon, ob es sich um eine Asynchronmaschine oder eine Synchronmaschine handelt. Aus dem Stand der Technik sind verschiedene Verfahren zum Schalten einer elektrischen Maschine in einen Freilauf oder in einen aktiven Kurzschluss bekannt.

In DE 10 2014 209 887 A1 wird ein Verfahren zum Schalten eines Wechselrichters eines elektrischen Antriebs eines Kraftfahrzeugs beschrieben. Dabei kann durch den Wechselrichter ein Freilauf-Betriebsmodus, ein Kurzschluss-Betriebsmodus und ein getakteter Betriebsmodus zum Betrieb der elektrischen Maschine eingestellt werden. Ein Umschalten zwischen den Betriebsmodi erfolgt dabei in Abhängigkeit eines ermittelten Spannungswerts und/oder eines ermittelten Stromwerts für den aktuellen Betriebsmodus, wobei ein Anpassungsvorgang in Abhängigkeit des ermittelten Spannungswerts und/oder des ermittelten Stromwerts zur Anpassung des Stroms und/oder Spannung in der elektrischen Maschine für den Zielbetriebsmodus erfolgt.

Dabei wird beim Übergang von dem Freilauf-Betriebsmodus in den Kurzschluss-Betriebsmodus zunächst ein Stromregler des Wechselrichters für eine kurze Zeit mit einer Stromsollwertvorgabe von null betrieben, wobei während dieser Zeit ein Spannungswert und/oder ein Stromwert für den aktuellen Betriebsmodus ermittelt werden. Innerhalb dieser Zeit kann die Spannung an der elektrischen Maschine stufenweise auf null gesenkt werden, wobei anschließend die Taktung des Wechselrichters mit einem Schalten des Wechselrichters in den Kurzschluss-Betriebsmodus beendet wird. Dadurch können Spannungsdifferenzen bzw. Stromdifferenzen zwischen dem aktuellen Betriebsmodus und dem Zielbetriebsmodus ausgeglichen werden und transiente Überströme bzw. Überspannungen reduziert oder verhindert werden.

DE 10 2013 226 560 A1 offenbart ein Verfahren für einen verbesserten Wechsel von einem Freilaufbetrieb in einen aktiven Kurzschluss einer elektrischen Maschine. Dabei wird der Wechsel von dem Freilauf in den aktiven elektrischen Kurzschluss solange verzögert, bis eine elektrische Spannung an den Anschlüssen der elektrischen Maschine einen vorbestimmten Wert aufweist. Auf diese Weise wird erreicht, dass das Umschalten in Abhängigkeit einer durch die bestimmte Spannung ermittelten Rotorlage erfolgen kann.

Aus der DE 10 2021 129 144 A1 ist ein Verfahren zum Betreiben einer elektrischen Schaltungsanordnung, umfassend eine elektrische Schaltung und eine elektrische Maschine, bekannt, wobei bei Erfüllung wenigstens eines Auslösekriteriums die elektrische Maschine über die elektrische Schaltung in einen Freilauf geschaltet wird, wonach in Abhängigkeit wenigstens eines eine Statorstromänderung in der elektrischen Maschine beschreibenden Messwertes für die Zeitdauer im Freilauf betrieben wird und anschließend über die elektrische Schaltung in einen aktiven Kurzschluss geschaltet wird.

Ein solches adaptives Einstellen der Freilaufzeit in Abhängigkeit eines Parameters erfolgt typischerweise über einen Mikrocontroller des Wechselrichters. Da aber die elektrische Maschine auch bei Ausfall des Mikrocontrollers selbst in einen sicheren Zustand geschaltet werden muss, ist es auch bekannt, in diesem Fall eine Umschaltung über eine reine Hardware-Schaltung vorzunehmen. Dabei wird die Zeit bis zum Umschalten für ein Worst-Case-Szenario dimensioniert, sodass die Freilaufzeit sehr gering ist und dadurch die Ströme im aktiven Kurzschluss noch sehr groß sein können. Andererseits ist so sichergestellt, dass trotz Ausfall des Mikrocontrollers und gegebenenfalls verschiedener Messeinrichtungen die elektrische Maschine noch in einem sicheren Betriebszustand überführt werden kann.

Der Erfindung liegt das technische Problem zugrunde, das Schalten einer elektrischen Maschine in einen sicheren Zustand bei Ausfall eines Mikrocontrollers zu verbessern sowie ein entsprechendes Verfahren zur Verfügung zu stellen.

Die Lösung des technischen Problems ergibt sich durch eine Schaltungsanordnung zur Ansteuerung eines Wechselrichters in einem Hochvoltnetz mit den Merkmalen des Anspruchs 1 sowie ein Verfahren mit den Merkmalen des Anspruchs 9. Weitere vorteilhafte Ausgestaltungen der Erfindung ergeben sich aus den Unteransprüchen.

Die Schaltungsanordnung zur Ansteuerung eines Wechselrichters in einem Hochvoltnetz, wobei der Wechselrichter mit einer Elektromaschine und einer Hochvoltbatterie verbunden ist, weist mindestens einen Mikrocontroller, mindestens eine Überwachungsschaltung für den Mikrocontroller und eine Hardware-Schaltung auf.

Die mindestens eine Überwachungsschaltung ist derart ausgebildet, im Fehlerfall des Mikrocontrollers diesen zu deaktivieren und ein Schaltsignal für die Hardware-Schaltung zu erzeugen, wobei die Schaltung ein Umschaltsignal von einem Freilauf in einen aktiven Kurzschluss erzeugt. Der Mikrocontroller ist derart ausgebildet, in Abhängigkeit von Parametern der Elektromaschine und/oder des Hochvoltnetzes eine optimale Freilaufzeit zu bestimmen. Die Hardware-Schaltung ist derart ausgebildet, dass die optimale Freilaufzeit von der Hardware-Schaltung durch Änderung eines Parameters kontinuierlich gemäß den Vorgaben des Mikrocontrollers eingestellt wird. Die Überwachungsschaltung ist derart ausgebildet, im Fehlerfall des Mikrocontrollers die Hardware-Schaltung von dem Mikrocontroller zu trennen, wobei ein Umschaltsignal gemäß der zuletzt eingestellten Freilaufzeit erzeugt wird. Hierdurch kann im Regelfall die Freilaufzeit verlängert werden, sodass die Ströme im aktiven Kurzschluss durch die Leistungshalbleiter reduziert werden können und so deren Belastung abnimmt. Entsprechend kann gegebenenfalls Chipfläche bei den Leistungshalbleitern reduziert werden.

In einer Ausführungsform sind die Parameter der Elektromaschine eine Drehzahl und eine Magnetisierung und der Parameter des Hochvoltnetzes die Gleichspannung am Wechselrichter bzw. am Zwischenkreiskondensator, wobei vorzugsweise der Mikrocontroller alle drei Parameter bei der Bestimmung der optimalen Freilaufzeit berücksichtigt. Dabei kann beispielsweise durch Vorversuche die jeweilige optimale Freilaufzeit bestimmt werden. Dabei kann dann die Zuordnung als dreidimensionales Kennfeld, als Look-up-Tabelle oder als analytische Funktion abgelegt sein. Dabei kann vorgesehen sein, dass der Mikrocontroller ausschließlich mit diesen drei Parametern die optimale Freilaufzeit ermittelt. Es kann aber auch vorgesehen sein, dass noch weitere Parameter berücksichtigt werden.

In einer weiteren Ausführungsform weist die Hardware-Schaltung eine Komparator/Timer-Stufe auf, bei der über eine Anfangsladung eines zeitbestimmenden Kondensators die Verzögerung eingestellt werden kann, einen Schwellwertschalter und einen abschaltbaren Operationsverstärker oder ein Tristate-Gatter auf, wobei die mindestens eine Überwachungsschaltung mit dem Eingang der Komparator/Timer-Stufe und dem Abschalteingang des Operationsverstärkers oder dem Tristate-Eingang des Tristate-Gatters verbunden ist, wobei der abschaltbare Operationsverstärker oder das Tristate-Gatter eingangsseitig mit dem Mikrocontroller und ausgangsseitig mit dem Kondensator verbunden ist. Hierdurch kann die Überwachungsschaltung im Fehlerfall sehr schnell den Operationsverstärker oder das Tristate-Gatter hochohmig schalten, sodass die Hardware-Schaltung vom Mikrocontroller entkoppelt ist, wobei die Freilaufzeit durch eine Einstellung einer Vorspannung am Kondensator angepasst werden kann. Der Vorteil des Tristate-Gatters ist dessen einfacher Aufbau, sodass dieses Kostenvorteile gegenüber dem Operationsverstärker hat.

In einer alternativen Ausführungsform weist die Hardware-Schaltung einen Komparator auf, dessen positiver Eingang mit der Überwachungsschaltung signaltechnisch über ein RC-Filter verbunden ist und an dessen negativem Eingang ein Kondensator gegen Masse geschaltet ist. Weiter weist die Hardware-Schaltung einen abschaltbaren Operationsverstärker oder ein Tristate-Gitter auf, wobei die mindestens eine Überwachungsschaltung mit dem Abschalteingang des Operationsverstärkers oder dem Tristate-Eingang des Tristate-Gatters verbunden ist. Dabei ist der abschaltbare Operationsverstärker oder das Tristate-Gatter eingangsseitig mit dem Mikrocontroller und ausgangsseitig mit dem Kondensator verbunden. Hierdurch kann die Hardware-Schaltung mit weniger Bauelementen realisiert werden. Weiter kann der Komparator mit einer Hysterese-Funktion ausgebildet sein.

In einer alternativen Ausführungsform weist die Hardware-Schaltung eine Abtast- und Halteschaltung und ein einstellbares Verzögerungselement auf. Dabei ist die Überwachungsschaltung mit dem Eingang des Verzögerungselements und dem Halte-Eingang der Abtast- und Halteschaltung verbunden. Der Eingang der Abtast- und Halteschaltung ist mit dem Mikrocontroller und der Ausgang der Abtast- und Halteschaltung ist mit einem Steuereingang des Verzögerungselements verbunden. Auch dies stellt eine Realisierung mit wenig Bauteilen dar.

In einer weiteren Ausführungsform weist die Schaltungsanordnung einen Rückkanal auf, wobei die Schaltungsanordnung derart ausgebildet ist, dass der Mikrocontroller und/oder ein anderer Controller über den Rückkanal die eingestellte Freilaufzeit auslesen kann. Beispielsweise können so Bauteiletoleranzen des Kondensators oder anderer Bauelemente kompensiert werden.

In einer weiteren Ausführungsform ist die Schaltungsanordnung derart ausgebildet, bei einer Abweichung zwischen vorgegebener Freilaufzeit durch den Mikrocontroller und eingestellter Freilaufzeit durch die Hardware-Schaltung ein Fehlersignal zu erzeugen. Hierdurch wird die Hardware-Schaltung auf Funktionsfähigkeit überwacht. Das Fehlersignal kann entweder auf einer Anzeigeeinheit dargestellt werden und/oder einen Notlaufbetrieb auslösen, sodass beispielsweise Betriebsparameter des Hochvoltnetzes angepasst werden.

In einer weiteren Ausführungsform ist in den Rückkanal ein abschaltbarer Operationsverstärker angeordnet, der eingangsseitig mit dem Kondensator verbunden ist, wobei der Abschalteingang mit der Überwachungsschaltung verbunden ist. Alternativ ist der Operationsverstärker nur kurzschlussfest und hochohmig ausgebildet.

In einer alternativen Ausführungsform ist im Rückkanal ein hochohmiger Widerstand oder ein Analog-Schalter angeordnet, wobei der hochohmige Widerstand vorzugsweise zur Anwendung kommt, da der Rückkanal weniger kritisch ist und nur sichergestellt werden muss, dass es keine Rückwirkungen auf die Spannung am Kondensator gibt.

Das Verfahren zum Betreiben einer Schaltungsanordnung zur Ansteuerung eines Wechselrichters in einem Hochvoltnetz, wobei der Wechselrichter mit einer Elektromaschine und einer Hochvoltbatterie verbunden ist, wobei die Schaltungsanordnung mindestens einen Mikrocontroller, mindestens eine Überwachungsschaltung für den Mikrocontroller und eine Hardware-Schaltung aufweist, beinhaltet den Schritt, dass die Überwachungsschaltung im Fehlerfall des Mikrocontrollers diesen deaktiviert und ein Schaltsignal für die Hardware erzeugt. Der Wechselrichter wird in einen Freilauf geschaltet, wobei die Hardware-Schaltung ein Umschaltsignal von einem Freilauf in einem aktiven Kurzschluss nach einer vorgegebenen Zeit erzeugt. Dabei bestimmt der Mikrocontroller in Abhängigkeit von Parametern der Elektromaschine und/oder des Hochvoltnetzes eine optimale Freilaufzeit, wobei die optimale Freilaufzeit von der Hardware-Schaltung durch Änderung eines Parameters kontinuierlich gemäß den Vorgaben des Mikrocontrollers eingestellt wird, wobei im Fehlerfall des Mikrocontrollers die Hardware-Schaltung von dem Mikrocontroller getrennt wird, wobei ein Umschaltsignal gemäß der zuletzt eingestellten Freilaufzeit erzeugt wird. Die Trennung des Mikrocontrollers kann dabei auch durch eine hochohmige Entkopplung erfolgen.

Hinsichtlich der weiteren verfahrensmäßigen Ausgestaltungen der Erfindung wird vollumfänglich auf die vorangegangenen Ausführungen Bezug genommen.

Die Erfindung wird nachfolgend anhand bevorzugter Ausführungsbeispiele näher erläutert. Die Figuren zeigen:
- Fig. 1: ein schematisches Blockschaltbild eines Hochvoltnetzes,
- Fig. 2: eine schematische Darstellung einer Hardware-Schaltung in einer ersten Ausführungsform,
- Fig. 3: eine schematische Darstellung einer Hardware-Schaltung in einer zweiten Ausführungsform und
- Fig. 4: eine schematische Darstellung einer Schaltungsanordnung mit einer Überwachungsschaltung für die Hardware-Schaltung.

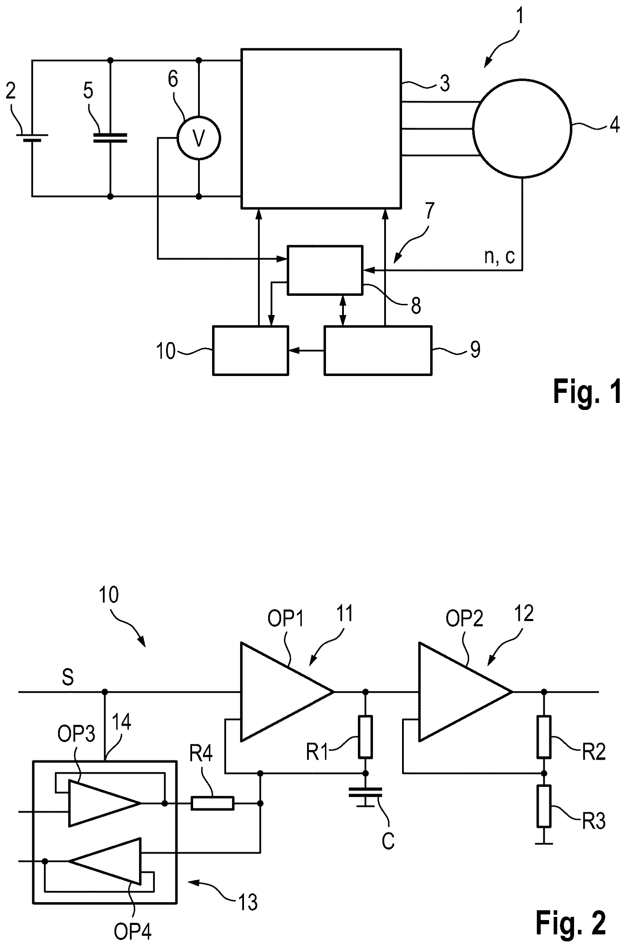

In der Fig. 1 ist stark vereinfacht ein Blockschaltbild eines Hochvoltnetzes 1 dargestellt, das beispielsweise ein Traktionsnetz eines Elektrofahrzeugs ist. Das Hochvoltnetz 1 weist eine Hochvoltbatterie 2, einen Wechselrichter 3 und eine Elektromaschine 4 auf. An der Gleichspannungsseite des Wechselrichters 3 ist ein Zwischenkreiskondensator 5 und eine Spannungsmesseinrichtung 6 angeordnet. Weiter weist das Hochvoltnetz 1 eine Schaltungsanordnung 7 auf, die mindestens einen Mikrocontroller 8, eine Überwachungsschaltung 9 für den Mikrocontroller 8 und eine Hardware-Schaltung 10 aufweist. Die Elektromaschine 2 ist beispielsweise als permanenterregte oder fremderregte Synchronmaschine ausgebildet. Der Wechselrichter 3 ist beispielsweise als B6-Brücke oder als 3-Level-Wechselrichter ausgebildet, wobei die Halbleiterschalter des Wechselrichters 3 vorzugsweise als SiC-Transistoren ausgebildet sind. Dabei können zur Erhöhung der Stromtragfähigkeit auch jeweils mehrere Transistoren parallel geschaltet werden, d.h. dass jeder High-Side- und jeder Low-Side-Schalter durch mehrere parallele Transistoren gebildet wird. Der Mikrocontroller 8 erzeugt im normalen Betrieb Steuersignale für den Wechselrichter 3, die dann über nicht dargestellte Gate-Treiber in Steuersignale für die Leistungshalbleiter des Wechselrichters 3 umgesetzt werden. Der Mikrocontroller 8 erhält Steuerbefehle von einem übergeordneten Steuergerät (beispielsweise einem Antriebssteuergerät), in welchem Betriebspunkt die Elektromaschine 4 betrieben werden soll. Der Mikrocontroller 8 erhält Daten von der Spannungsmesseinrichtung 6 sowie von der Elektromaschine 4, insbesondere eine Drehzahl n und eine Magnetisierung c. Dabei können Situationen auftreten, in denen die Elektromaschine 4 in einen sicheren Zustand überführt werden muss. Hierzu wird der Wechselrichter 3 zunächst in einen Freilauf geschaltet (d.h. alle Halbleiterschalter des Wechselrichters 3 sind gesperrt), wobei dann gegebenenfalls in bestimmten Betriebszuständen Ströme aus der Elektromaschine 4 über Freilaufdioden des Wechselrichters 3 fließen können. Ist die Drehzahl gering, sodass die EMK klein ist, fließt dort insbesondere im motorischen Betrieb bei der Freilaufschaltung kein Strom. Wenn Strom fließt, dann fällt elektrische Leistung über den Freilaufdioden ab, wobei zusätzlich der Zwischenkreiskondensator 5 geladen wird. Nach einer gewissen Zeit wird dann der Wechselrichter 3 bzw. die Elektromaschine 4 in den aktiven Kurzschluss geschaltet, wozu entweder alle High-Side-Schalter oder alle Low-Side-Schalter des Wechselrichters 3 durchgeschaltet werden. Arbeitet der Mikrocontroller 8 einwandfrei, kann dieser den Wechselrichter 3 in den Freilauf und nachfolgenden aktiven Kurzschluss schalten.

Im Fehlerfall des Mikrocontrollers 8 muss ein Überführen der Elektromaschine 4 in einen sicheren Zustand gewährleistet sein. Daher wird der Mikrocontroller 8 von der mindestens einen Überwachungsschaltung 9 überwacht und im Fehlerfall deaktiviert. Deaktivierung schließt ein Abschalten mit ein. Die Umschaltung von Freilauf in den aktiven Kurzschluss übernimmt dann die Hardware-Schaltung 10, die von der Überwachungsschaltung 9 angesteuert wird. Um nun auch in dieser Situation eine optimale Freilaufzeit auszunutzen, berechnet der Mikrocontroller 8 kontinuierlich anhand der Parameter Drehzahl n und Magnetisierung c sowie der Spannung am Zwischenkreiskondensator 5 eine optimale Freilaufzeit an die Hardware-Schaltung 10, die diese durch Einstellung eines Parameters der Hardware-Schaltung einstellt. Tritt dann der Fehlerfall im Mikrocontroller 8 auf, so wird dieser deaktiviert. Die Überwachungsschaltung 9 steuert die Hardware-Schaltung 10 an und entkoppelt diese vom Mikrocontroller 8, damit dieser keinen Einfluss auf die Hardware-Schaltung 10 hat. Die Überwachungsschaltung 9 kann dann ein Signal an den Wechselrichter 3 übermitteln, dass dieser in den Freilauf schaltet, wobei dann anschließend die Hardware-Schaltung 10 das Umschaltsignal in den aktiven Kurzschluss erzeugt.

In der Fig. 2 ist eine erste Ausführungsform für die Hardware-Schaltung 10 dargestellt. Die Hardware-Schaltung 10 weist eine Komparator/Timer-Stufe 11 auf, die aus einem Operationsverstärker OP1 und einem Spannungsteiler aus einem Widerstand R1 und einem Kondensator C besteht. Weiter weist die Hardware-Schaltung 10 einen Schwellwertschalter 12 auf, der einen Operationsverstärker OP2 und einen Spannungsteiler aus zwei Widerständen R2, R3 aufweist. Schließlich weist die Hardware-Schaltung 10 noch zwei abschaltbare Operationsverstärker OP3, OP4 auf. Dabei ist der eine Operationsverstärker OP3 eingangsseitig mit dem Mikrocontroller 8 und ausgangsseitig über einen Widerstand R4 mit dem Kondensator C der Komparator/Timer-Stufe 11 verbunden. Der zweite abschaltbare Operationsverstärker OP4 ist eingangsseitig mit dem Kondensator C der Komparator/Timer-Stufe 11 und ausgangsseitig mit dem Mikrocontroller 8 und/oder einem anderen Controller verbunden, was später noch näher erläutert wird. Der Mikrocontroller 8 berechnet aus den Parametern Drehzahl n, Magnetisierung c der Elektromaschine 4 sowie der Spannung am Zwischenkreiskondensator 5 eine optimale Freilaufzeit und rechnet diese in eine Spannung am Kondensator C um. Diese Spannung wird vom Mikroprozessor 8 als Analoggröße an den Operationsverstärker 3 gegeben, der diese Spannung am Kondensator C einstellt. Dieser Vorgang findet kontinuierlich im Betrieb statt. Über den anderen abschaltbaren Operationsverstärker OP4 wird die Spannung am Kondensator C ausgelesen. Der zweite abschaltbare Operationsverstärker 4 bildet einen Rückkanal 13. Der Eingang der Komparator/Timer-Stufe 11 und der Abschalteingang 14 der beiden Operationsverstärker OP3, OP4 ist mit der Überwachungsschaltung 9 (siehe Fig. 1) verbunden.

Erfasst dann die Überwachungsschaltung 9 einen Fehler des Mikrocontrollers 8, sodass also dessen Daten nicht mehr vertraut werden kann, deaktiviert die Überwachungsschaltung 9 den Mikrocontroller 8 und legt ein Spannungssignal S an den Eingang der Integrator-Stufe. Durch das Spannungssignal S werden gleichzeitig die beiden Operationsverstärker OP3, OP4 abgeschaltet, sodass die Hardware-Schaltung 10 vom Mikrocontroller 8 entkoppelt ist. In Abhängigkeit von der zuletzt eingestellten Spannung vom Kondensator C (also vor der Abschaltung der Operationsverstärker OP3, OP4) erzeugt dann die Integrator-Stufe 11 nach einer eingestellten Zeit ein ausreichend großes Signal, um den Schwellwertschalter 12 zu schalten. Dieses am Ausgang des Schwellwertschalters 12 erzeugte Signal schaltet dann den Wechselrichter 3 in den aktiven Kurzschluss.

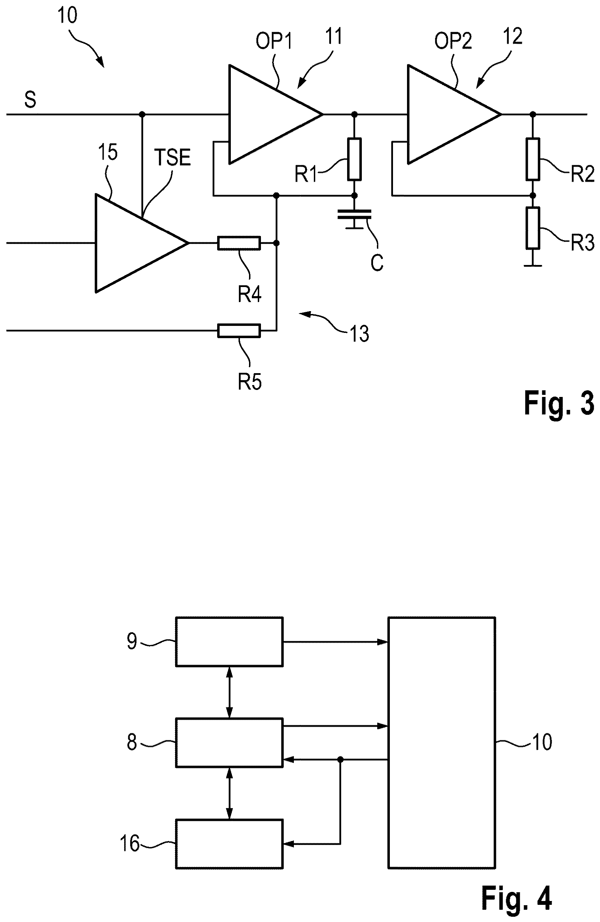

In der Fig. 3 ist eine alternative Ausführungsform der Hardware-Schaltung 10 dargestellt. Der einzige Unterschied zur Ausführungsform von Fig. 2 ist, dass die beiden abschaltbaren Operationsverstärker OP3, OP4 durch ein Tristate-Gatter 15 und einen Widerstand R5 ersetzt wurden, wobei R5 >> R1, R4 ist. Dies stellt gegenüber der Ausführungsform gemäß Fig. 2 eine einfache und kostengünstige Alternative dar. Ein weiterer Vorteil ist, dass der Mikrocontroller 8 ein PWM-Signal zur Einstellung der Spannung am Kondensator C erzeugen kann, anstelle einer analogen Spannung, was die Umsetzung einfacher macht. Der Tristate-Eingang TSE ist dabei wie der Abschalteingang 14 in Fig. 2 mit der Überwachungsschaltung 9 verbunden.

In der Fig. 4 ist schematisch eine Schaltungsanordnung 7 dargestellt, die zusätzlich eine Überwachungsschaltung 16 für die Hardware-Schaltung 10 aufweist. Dabei kann die Überwachungsschaltung 16 auch in die Überwachungsschaltung 9 oder in den Mikrocontroller 8 integriert sein. Die Funktionsweise ist wie folgt. Über den Rückkanal 13 wird die eingestellte Spannung am Kondensator C der Integrator-Stufe 11 (siehe Fig. 2, 3) ausgelesen. Der Mikrocontroller 8 kann diese Information nutzen, um das Stellsignal nachzuregeln, um so beispielsweise Bauteiletoleranzen auszugleichen. Der Mikrocontroller 8 übermittelt der Überwachungsschaltung 16 das Stellsignal zur Einstellung der Spannung am Kondensator C, also entweder den Analogwert (siehe Fig. 2) oder das PWM-Signal (siehe Fig. 3). Dabei ist die Übertragungsstrecke von Mikrocontroller 8 zur Hardware-Schaltung 10 bekannt. Die Überwachungsschaltung 16 kann bestimmen, ob die empfangenen Daten auf dem Rückkanal 13 mit den zu erwartenden Daten aufgrund der Stellsignale des Mikrocontrollers 8 übereinstimmen. Ist die Abweichung dabei größer einem Schwellwert, spricht dies für einen Defekt in der Hardware-Schaltung 10, sodass beispielsweise ein Notbetrieb eingeleitet werden muss oder zumindest eine Fehlermeldung erzeugt werden muss.

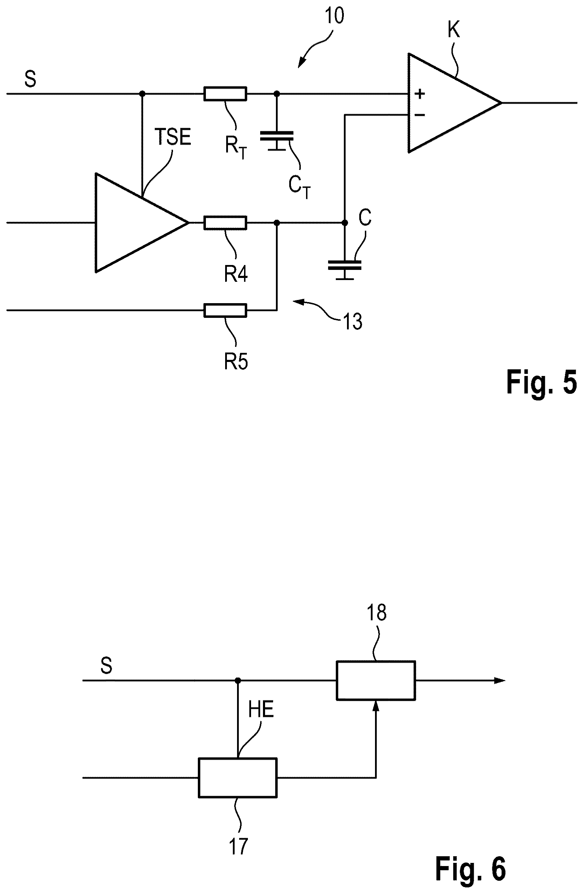

In Fig. 5 ist eine alternative Ausführungsform dargestellt. In den vorangegangenen Beispielen wurde der für die Verzögerungszeit maßgebliche Kondensator C durch den Mikrocontroller 8 vorgeladen, so dass die Verzögerungszeit durch die Anfangsladung des Kondensators C einstellbar ist. In Fig. 5 wird das Signal S durch ein klassisches RC-Filter aus dem Kondensator C_{T} und dem Widerstand R_{T} verzögert. Die einstellbare Zeitverzögerung ergibt sich hier daraus, dass ein Schwellwert des Komparators K über die Spannung am Kondensator C durch den Mikrocontroller 8 arbeitspunktabhängig eingestellt werden kann. Ist die Spannung am Kondensator C gering, erreicht die Spannung am Kondensator C_{T} bei einer Veränderung des Signals S schon sehr früh den durch die Spannung an C definierten Schwellwert des Komparators, die Verzögerungszeit ist damit gering. Ist die Spannung am Kondensator C groß, ist die Verzögerungszeit entsprechend länger.

Bei dieser Ausführungsform handelt es sich quasi um eine Sample & Hold-Anordnung, bei der die Spannung am Kondensator C als Schwellwert für die Verzögerungsschaltung analog gespeichert wird.

In der Fig. 6 ist eine weitere alternative Ausführungsform dargestellt, wobei die Hardware-Schaltung 10 eine Abtast- und Halteschaltung 17 und ein einstellbares Verzögerungselement 18 aufweist, wobei die Überwachungsschaltung 9 (siehe Fig. 1) mit dem Halte-Eingang HE der Abtast- und Halteschaltung 17 und dem Eingang des Verzögerungselements 18 verbunden ist, wobei der Eingang der Abtast- und Halteschaltung 17 mit dem Mikrocontroller 8 (siehe Fig. 1) und der Ausgang der Abtast- und Halteschaltung 17 mit einen Steuereingang des Verzögerungselements 18 verbunden ist.

### Bezugszeichenliste

- 1: Hochvoltnetz
- 2: Hochvoltbatterie
- 3: Wechselrichter
- 4: Elektromaschine
- 5: Zwischenkreiskondensator
- 6: Spannungseinrichtung
- 7: Schaltungsanordnung
- 8: Mikrocontroller
- 9: Überwachungsschaltung
- 10: Hardware-Schaltung
- 11: Komparator/Timer-Stufe
- 12: Schwellwertschalter
- 13: Rückkanal
- 14: Abschalteingang
- 15: Tristate-Gatter
- 16: Überwachungsschaltung
- 17: Abtast- und Halteschaltung
- 18: Verzögerungselement
- R1-R5: Widerstände
- C: Kondensator
- K: Komparator
- OP1-OP4: Operationsverstärker
- TSE: Tristate-Eingang
- S: Spannungssignal
- R_{T}: Widerstand
- C_{T}: Kondensator

## Patentansprüche

1. Schaltungsanordnung (7) zur Ansteuerung eines Wechselrichters (3) in einem Hochvoltnetz (1), wobei der Wechselrichter (3) mit einer Elektromaschine (4) und einer Hochvoltbatterie (2) verbunden ist, wobei die Schaltungsanordnung (7) mindestens einen Mikrocontroller (8), mindestens eine Überwachungsschaltung (9) für den Mikrocontroller (8) und eine Hardware-Schaltung (10) aufweist, wobei die mindestens eine Überwachungsschaltung (9) derart ausgebildet ist, im Fehlerfall des Mikrocontrollers (8) diesen zu deaktivieren und ein Schaltsignal für die Hardware-Schaltung (10) zu erzeugen, wobei die Hardware-Schaltung (10) zunächst einen Freilauf erzwingt und danach ein Umschaltsignal von einem Freilauf in einen aktiven Kurzschluss erzeugt,
**dadurch gekennzeichnet, dass**
der Mikrocontroller (8) derart ausgebildet ist, in Abhängigkeit von Parametern der Elektromaschine (4) und/oder des Hochvoltnetzes (1) eine optimale Freilaufzeit zu bestimmen, wobei die Hardware-Schaltung (10) derart ausgebildet ist, dass die optimale Freilaufzeit von der Hardware-Schaltung (10) durch Änderung eines Parameters kontinuierlich gemäß den Vorgaben des Mikrocontrollers (8) eingestellt wird, wobei die Überwachungsschaltung (9) derart ausgebildet ist, im Fehlerfall des Mikrocontrollers (8) die Hardware-Schaltung (10) von dem Mikrocontroller (8) zu trennen, wobei ein Umschaltsignal gemäß der zuletzt eingestellten Freilaufzeit erzeugt wird.

2. Schaltungsanordnung nach Anspruch 1, **dadurch gekennzeichnet, dass** die Parameter der Elektromaschine (4) eine Drehzahl (n) und eine Magnetisierung (c) sind und der Parameter des Hochvoltnetzes die Gleichspannung am Wechselrichter (3) ist.

3. Schaltungsanordnung nach Anspruch 1 oder 2, **dadurch gekennzeichnet, dass** die Hardware-Schaltung (10) eine Komparator/Timer-Stufe (11), einen Schwellwertschalter (12) und einen abschaltbaren Operationsverstärker (OP3) oder ein Tristate-Gatter (15) aufweist, wobei die Komparator/Timer-Stufe (11) mindestens einen Kondensator (C) aufweist, wobei die mindestens eine Überwachungsschaltung (9) mit dem Eingang der Integrator-Stufe (11) und dem Abschalteingang (14) des Operationsverstärkers oder dem Tristate-Eingang (TSE) des Tristate-Gatters (15) verbunden ist, wobei der abschaltbare Operationsverstärker (OP3) oder das Tristate-Gatter (15) eingangsseitig mit dem Mikrocontroller (8) und ausgangsseitig mit dem Kondensator (C) verbunden ist.

4. Schaltungsanordnung nach Anspruch 1 oder 2, **dadurch gekennzeichnet, dass** die Hardware-Schaltung (10) einen Komparator (K) aufweist, dessen positiver Eingang mit der Überwachungsschaltung (9) signaltechnisch über ein RC-Filter verbunden ist und an dessen negativem Eingang ein Kondensator (C) gegen Masse geschaltet ist, wobei die Hardware-Schaltung (10) weiter einen abschaltbaren Operationsverstärker (OP3) oder ein Tristate-Gatter (15) aufweist, wobei die mindestens eine Überwachungsschaltung (9) mit dem Abschalteingang des Operationsverstärkers oder dem Tristate-Eingang (TSE) des Tristate-Gatters (15) verbunden ist, wobei der abschaltbare Operationsverstärker (OP3) oder das Tristate-Gatter (15) eingangsseitig mit dem Mikrocontroller (8) und ausgangsseitig mit dem Kondensator (C) verbunden ist.

5. Schaltungsanordnung nach Anspruch 1 oder 2, **dadurch gekennzeichnet, dass** die Hardware-Schaltung (10) eine Abtast- und Halteschaltung (17) und ein einstellbares Verzögerungselement (18) aufweist, wobei die Überwachungsschaltung (9) mit dem Eingang des Verzögerungselements (18) und dem Halte-Eingang (HE) der Abtast- und Halteschaltung (17) verbunden ist, wobei der Eingang der Abtast- und Halteschaltung (17) mit dem Mikrocontroller (8) und der Ausgang der Abtast- und Halteschaltung (17) mit einem Steuereingang des Verzögerungselements (18) verbunden ist.

6. Schaltungsanordnung nach einem der vorangegangenen Ansprüche, **dadurch gekennzeichnet, dass** die Schaltungsanordnung (7) einen Rückkanal (13) aufweist, wobei die Schaltungsanordnung (7) derart ausgebildet ist, dass der Mikrocontroller (8) und/oder ein anderer Controller über den Rückkanal (13) die eingestellte Freilaufzeit der Hardware-Schaltung (10) auslesen kann.

7. Schaltungsanordnung nach Anspruch 6, **dadurch gekennzeichnet, dass** die Schaltungsanordnung (7) derart ausgebildet ist, bei einer Abweichung zwischen vorgegebener Freilaufzeit durch den Mikrocontroller (8) und eingestellter Freilaufzeit durch die Hardware-Schaltung (10) ein Fehlersignal zu erzeugen.

8. Schaltungsanordnung nach Anspruch 6 oder 7, **dadurch gekennzeichnet, dass** im Rückkanal (13) ein abschaltbarer Operationsverstärker (OP4), ein hochohmiger Widerstand (R5), ein Analogschalter oder ein kurzschlussfester, hochohmiger Operationsverstärker angeordnet ist.

9. Verfahren zum Betreiben einer Schaltungsanordnung (7) zur Ansteuerung eines Wechselrichters (3) in einem Hochvoltnetz (1), wobei der Wechselrichter (3) mit einer Elektromaschine (4) und einer Hochvoltbatterie (2) verbunden ist, wobei die Schaltungsanordnung (7) mindestens einen Mikrocontroller (8), mindestens eine Überwachungsschaltung (9) für den Mikrocontroller (8) und eine Hardware-Schaltung (10) aufweist, wobei die mindestens eine Überwachungsschaltung (9) im Fehlerfall des Mikrocontrollers (8) diesen deaktiviert und ein Schaltsignal für die Hardware-Schaltung (10) erzeugt, wobei der Wechselrichter (3) in einen Freilauf geschaltet wird, wobei die Hardware-Schaltung (10) ein Umschaltsignal von einem Freilauf in einen aktiven Kurzschluss nach einer vorgegebenen Zeit erzeugt,
**dadurch gekennzeichnet, dass**
der Mikrocontroller (8) in Abhängigkeit von Parametern der Elektromaschine (4) und/oder des Hochvoltnetzes (1) eine optimale Freilaufzeit bestimmt, wobei die optimale Freilaufzeit von der Hardware-Schaltung (10) durch Änderung eines Parameters kontinuierlich gemäß den Vorgaben des Mikrocontrollers (8) eingestellt wird, wobei im Fehlerfall des Mikrocontrollers (8) die Hardware-Schaltung (10) von dem Mikrocontroller (8) getrennt wird, wobei ein Umschaltsignal gemäß der zuletzt eingestellten Freilaufzeit erzeugt wird.

10. Verfahren nach Anspruch 8, **dadurch gekennzeichnet, dass** die Hardware-Schaltung (10) eine Komparator/Timer-Stufe (11), einen Schwellwertschalter (12) und einen abschaltbaren Operationsverstärker (OP3) oder ein Tristate-Gatter (15) aufweist, wobei die Komparator/Timer-Stufe (11) mindestens einen Kondensator (C) aufweist, wobei die mindestens eine Überwachungsschaltung (9) mit dem Eingang der Komparator/Timer-Stufe (11) und dem Abschalteingang (14) des Operationsverstärkers (OP3) oder dem Tristate-Eingang (TSE) des Tristate-Gatters (15) verbunden ist, wobei der abschaltbare Operationsverstärker (OP3) oder das Tristate-Gatter (15) eingangsseitig mit dem Mikrocontroller (8) und ausgangsseitig mit dem Kondensator (C) verbunden ist, wobei die optimale Freilaufzeit durch eine Einstellung der Spannung am Kondensator (C) eingestellt wird.
